# EUROPEAN PATENT SPECIFICATION

(11) **EP 0 516 092 B1**
(45) Date of publication and mention of the grant of the patent: **12.03.1997**
(21) Application number: 92108964.5
(22) Date of filing: 27.05.1992
(51) Int. Cl.: H04N 1/028, H04N 1/10

(54) **Image reader**
Bildlasergerät
Dispositif de lecture d'image

(30) Priority: 28.05.1991 JP 123358/91; 08.11.1991 JP 292924/91
(43) Date of publication of application: 02.12.1992
(73) Proprietor: Shinko Electric Co. Ltd., Chuo-ku Tokyo 103 (JP)
(72) Inventor: Fukuoka, Hiroaki, c/o Ise Factory SHINKO, Ise-shi, Mie-ken 516 (JP); Kawano, Junji, c/o Ise Factory SHINKO, Ise-shi, Mie-ken 516 (JP); Miyashita, Yoshikazu, c/o Ise Factory SHINKO, Ise-shi, Mie-ken 516 (JP); Sekiguchi, Hideaki, c/o Ise Factory SHINKO, Ise-shi, Mie-ken 516 (JP); Nakagawa, Hitoshi, c/o Ise Factory SHINKO, Ise-shi, Mie-ken 516 (JP)
(74) Representative: Goddar, Heinz J., Dr.

(56) References cited:
- DE-A- 3 233 232
- DE-A- 3 713 009
- US-A- 4 806 775
- US-A- 4 893 196
- PATENT ABSTRACTS OF JAPAN vol. 014, no. 411 (E-0973) 5 September 1990 & JP-A-21 55 438

## Description

The present invention relates to an image reader.

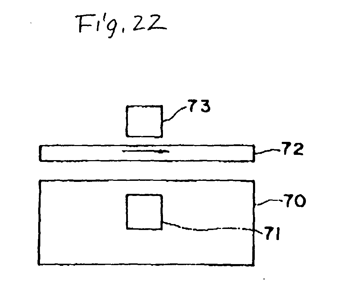

Fig. 22 is a schematic view explaining a basic operation of a conventional image reader for reading both a reflection manuscript and a transmission manuscript. The image reader comprises a casing 70, a read unit 71, an manuscript plate 72 respectively housed in the casing 70 and a light source 73 for the transmission manuscript disposed outside the casing 70.

Since a high quality image can be obtained when the light source is disposed over the manuscript when the transmission manuscript is read, the light source of the transmission manuscript is disposed outside the casing. An manuscript plate of this image reader is a movable type.

The conventional image reader has such a drawback that a large space is required for installation thereof since the manuscript plate should be moved for reading both the reflection manuscript and the transmission manuscript. If the manuscript slate is of a fixed-type, this drawback can be solved. However, in the latter case, both the light source and the read portion should be moved together, which involves a complicated structure. Furthermore, when the reflection manuscript is read, a light source unit for reading the transmission manuscript (hereinafter referred to as a transmission read light source unit) impedes to read the reflection manuscript, hence the transmission read light source unit is separably kept, which is troublesome. Still furthermore, it is necessary to provide a power source for supplying the power to the transmission read light source unit in addition to a power source for supplying the power to the light source unit for reading the reflection manuscript (hereinafter referred to as a reflection read light source unit), which makes the image reader expensive.

The present invention has been made to solve the problems in the conventional image reader and to provide a fixed manuscript plate type image reader for use in reading the reflection/transmission manuscripts, which is capable of reading the reflection manuscript and holding the transmission read light source, without enlarging the size thereof and with reduction of the cost involved in the luminaire power source compared with the conventional image reader.

To achieve the above object, the image reader according to the present invention comprises a casing having a ceiling of a transparent plate, the casing further housing therein a read unit provided with a reflection read light source unit, a drive mechanism for reciprocally moving the read unit from its home position and a luminaire power source unit; and a transmission read light source unit provided separately from the casing; wherein the transmitted light which has passed the manuscript or the reflected light which reflected from the manuscript are focused on a receiving surface of a read sensor of the read unit to thereby produce the image thereon;
characterized in that the image reader further comprises a holding mechanism for supporting the transmission read light source unit in a non-engaged position with said read unit above the casing, and a connecting mechanism for mechanically and electrically connecting said transmission read light source unit in a lowered position to the read unit, the connecting mechanism being slidable in holder recesses provided in the ceiling, and that the luminaire power source unit is provided with an inverter power source, which is common to the reflection read light source unit and the transmission read light source unit, and with a light source unit switching device capable of providing the output of the inverter power source to either the transmission read light source unit or the reflection read light source unit depending on whether the transmission read light source unit is connected to the read unit or not.

The above and other objects, features and advantages of the present invention will become more apparent from the following description taken in conjunction with the accompanying drawings.
Fig. 1 is a perspective view of an image reader according to a preferred embodiment of the present invention;
Fig. 2 is a schematic view showing an internal arrangement of a casing in Fig. 1;
Fig. 3 is a schematic longitudinal cross-sectional view showing an internal arrangement of the casing in Fig. 1;
Fig. 4 is a side view showing a positional relation between a transmission read light source unit and a read unit in Fig. 1;
Fig. 5 is a plan view showing a part of the image reader in Fig. 3;
Fig. 6 is a side cross-sectional view showing a part of the image reader in Fig. 3;
Fig. 7 is a side cross-sectional view showing a part of the transmission read light source unit in Fig. 3;
Fig. 8 is a side cross-sectional view showing the read unit in Fig. 2;

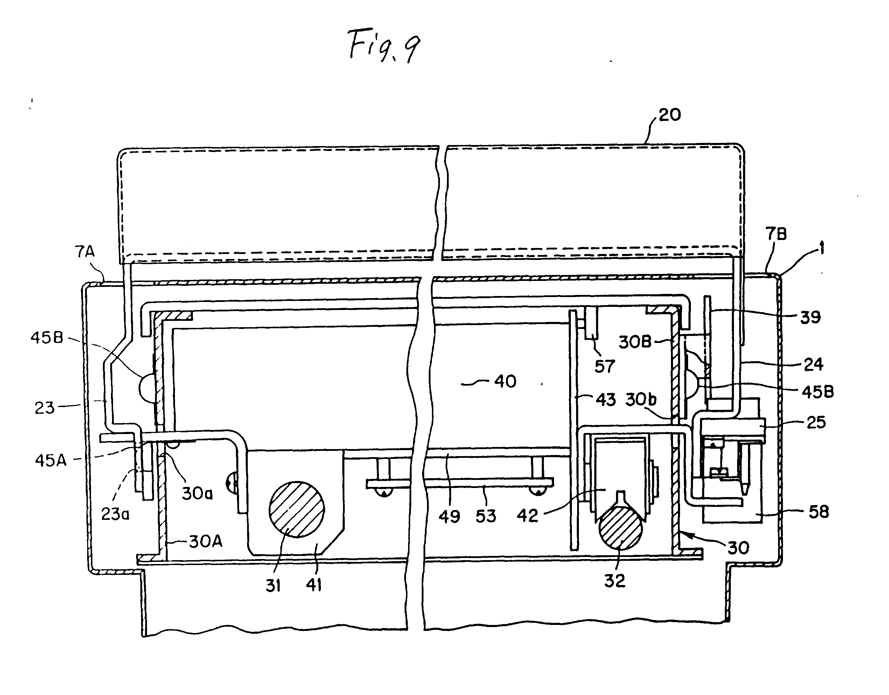

Fig. 9 is a longitudinal cross-sectional view showing the state where the transmission read light source unit is set to the read unit in Fig. 1;
Fig. 10 is a longitudinal cross-sectional view showing the state where the transmission read light source unit is not set to the read unit in Fig. 1;
Fig. 11 is a circuit diagram of a luminaire power source unit in Fig. 1;
Fig. 12 is a circuit diagram of an interlock circuit of the luminaire power source unit in Fig. 11;
Fig. 13 is a perspective view showing an example of a manuscript presser cover in Fig. 2 wherein the manuscript presser cover is closed;
Fig. 14 is a perspective view showing an example of the manuscript presser cover in Fig. 2 wherein the manuscript presser cover is open;
Fig. 15 is a view explaining a focal depth of a convergent rod lens in Fig. 4;
Fig. 16 is a view explaining the influence caused by the displacement of center lines of the convergent rod lens and a line sensor in Fig. 4;
Fig. 17 is a view showing an optical axis position minute regulating mechanism of the convergent rod lens array in Fig. 4;
Fig. 18 is a view showing the holder of the convergent rod lens array in Fig. 4;
Fig. 19 is a view showing a line direction position minute regulating mechanism of a CCD sensor in Fig. 8;
Fig. 20 is a view of an eccentric shaft in Fig. 19;
Fig. 21 is a perspective view of a sensor holder in Fig. 19; and
Fig. 22 is a schematic view explaining a basic operation of a conventional image reader.

An image reader according to a preferred embodiment of the present invention will be described hereinafter with reference to attached drawings.

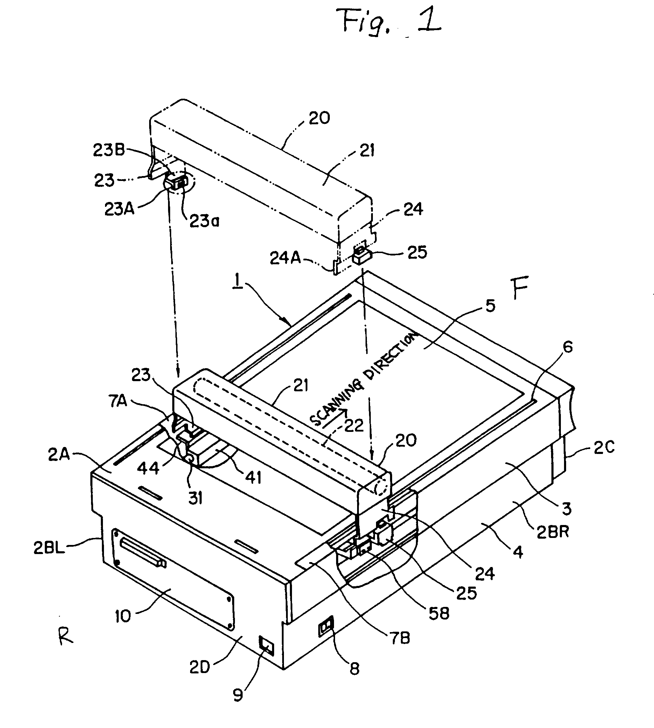

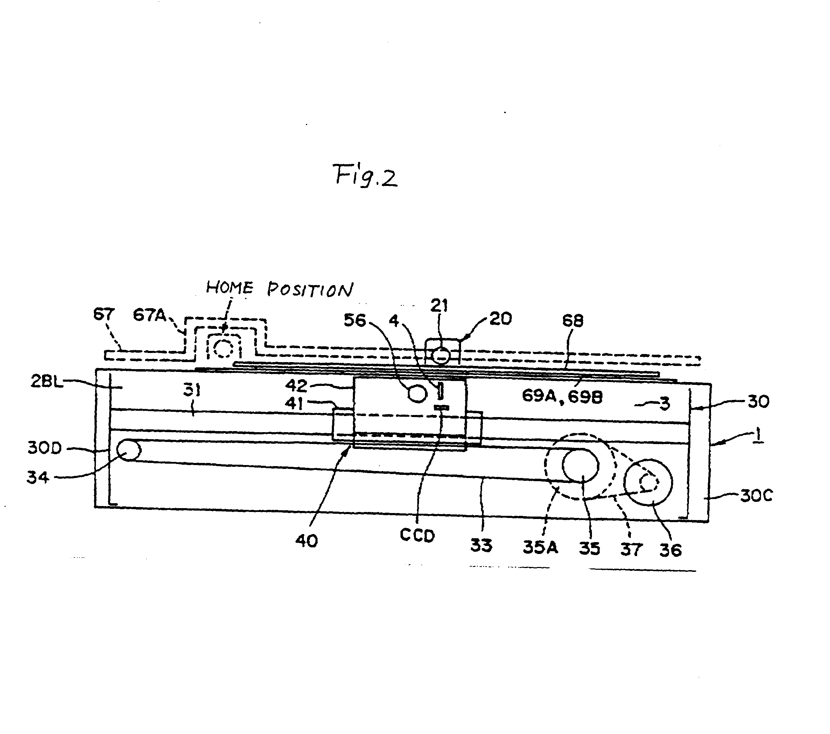

In Figs. 1 and 2, the image reader comprises a casing 1, which is composed of a first housing 3 for housing a read unit at the upper portion thereof under a ceiling 2A and a second housing 4 for housing a power source and a control unit, etc. at the lower portion thereof. Denoted at F and R are the front and rear sides of the casing 1 respectively. The ceiling 2A has a transparent manuscript glass plate 5 serving as an manuscript plate which is engaged therein and two slit shaped holder recesses 6 which slidably support the holder and are disposed in parallel with each other at both ends thereof and extend in the longitudinal directions thereof (in the scanning direction). A first holder entry 7A is defined at the rear end side of the holder recess 6 at the given position thereof (left side in Fig. 1) while a second holder entry 7B serving also as a power source connecting entry is defined at the rear end side of the holder recess 6 at the given position thereof (right side in Fig. 1). The casing 1 has a right side plate 2BR to which a power source switch 8 is attached and a rear plate 2D to which a power source connector 9 is attached and a front plate 2C to which a cover 10 provided with a gripper is detachably attached. Denoted at 2BL is a left side plate of the casing 1 while 2C is a front plate of the casing 1. The power source connector 9 is connected to a commercial power source, not shown.

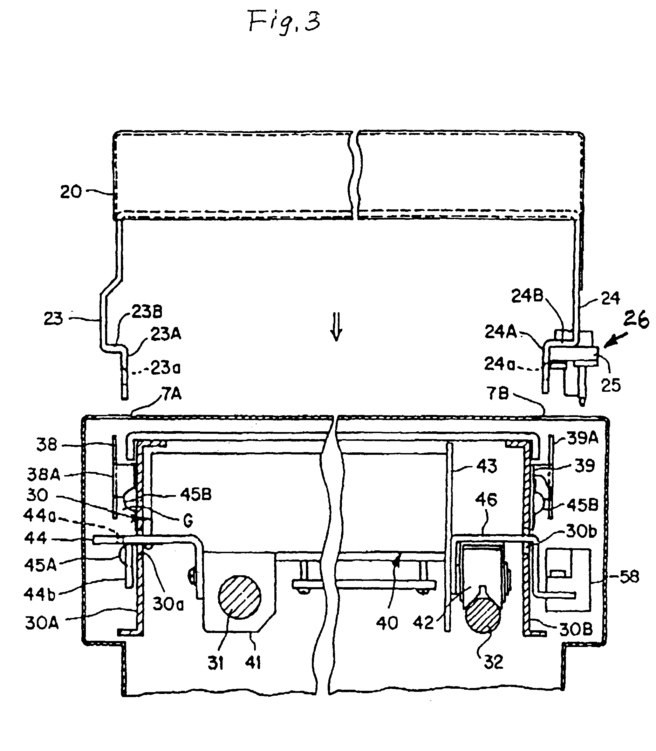

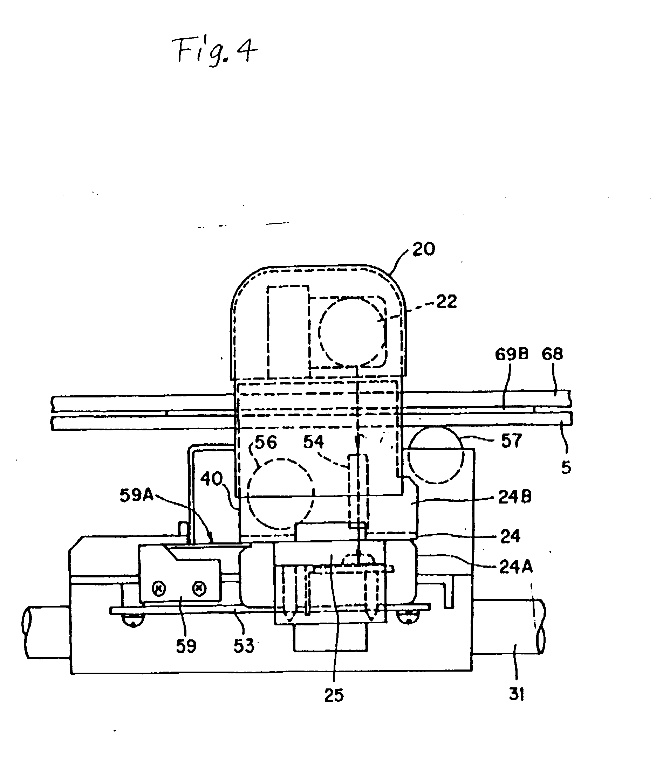

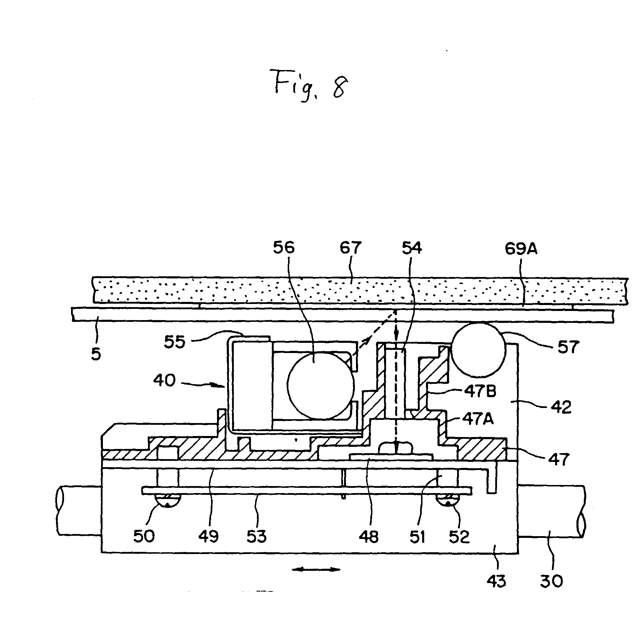

A transmission read light source unit 20 comprises a rectangular unit case 21 in which a fluorescent lamp 22 is housed as illustrated in Figs. 4 and 7, a first plate-shaped holder 23 hung from the left end lower surface of the unit case 21 as illustrated in Fig. 3 and a second plate-shaped holder 23 hung from the right end lower surface of the unit case 21 as illustrated in Fig. 3. The first plate holder 23 has a stepped portion 23B and a latch portion 23A which is hung from a free end of the stepped portion 23B and is provided with a laterally directed engaging slit 23a. A second plate holder 24 has a stepped portion 24B and a latch portion 24A which is hung from a free end of the stepped portion 24B and is provided with a laterally directed engaging slit 24a. A power source plug 25 is attached to the second holder 24. The second holder 24 is retained by a lever 59A of an interlock switch (micro switch) 59, described later, at the lower surface of the upper stepped portion 24B thereof. The stepped portion 24B and the power source plug 25 constitute a power source connecting portion 26 and the power source connecting entry 7B has a slit through which the power source connecting portion 26 can pass slidably. The power source plug 25 has connecting pins 25A and 25B. The transmission manuscript 69B such as a positive film is placed on the transparent manuscript glass plate 5 and positioned under a diffusion plate 68 in Fig. 4.

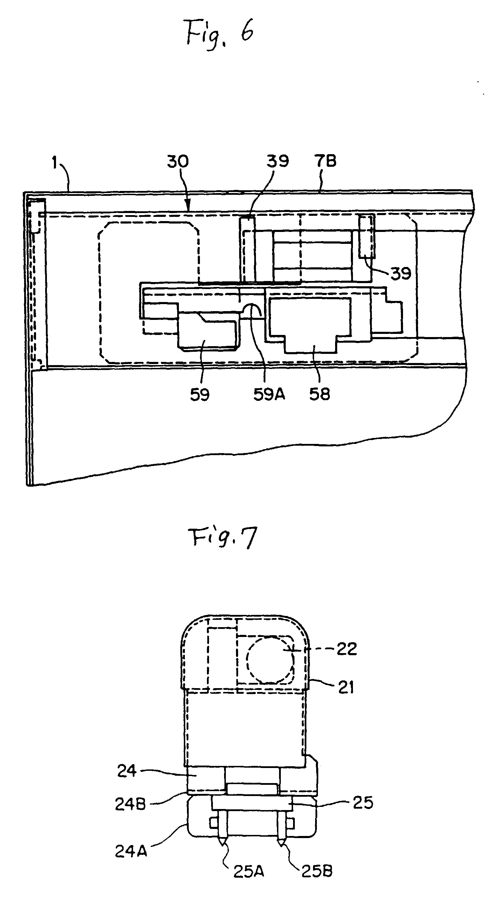

Fig. 2 is a schematic view showing the internal structure of the first housing 3 for housing the read unit of the casing 1 the detail of which is illustrated in Figs. 3 to 6. The first housing 3 comprises a casing 30 for partitioning the first housing 3, a slide shaft 31 which extends in the forward and backward directions of the casing 30 (in the directions to a front frame 30C and a rear frame 30D), a guide shaft 32 which extends in the forward and backward directions of the casing 30 (in the directions to a front frame 30D and a rear frame 30D), a slider 41 which is provided at the lower surface of a read unit 40 and engaged with the slide shaft 31 and a slider 42 provided on a carriage 43 of the read unit 40 which is engaged with the guide shaft 32. The first housing 3 further include an endless belt 33 which is entrained around a driven wheel 34 at the side of the rear frame 30D and a drive wheel 35 at the side of the front frame 30C and the lower portion of the carriage 43 of the read unit 40 is connected to the endless belt 33. The drive wheel 35 is normally and reversely rotated by a motor 36 by way of a pulley 35A and an endless belt 37.

In Fig. 3, the slider 41 supports a holder receiving member 44 which extends laterally by penetrating a slit 30a, which is defined at and extends forward and backward directions of the side frame 30A of the casing 30. The holder receiving member 44 has a slit 44a, which projects from the casing 30, and a support plate 44b which is hung from the slit 44a. A latching semicylindrical spring 45A is attached to the surface of the support plate 44b. A holder receiving member 46 is attached to the carriage 43 which extends laterally by penetrating a slit 30b, which is defined and extends forward and backward directions of the side frame 30B. The portion projecting from the first casing 30 is hung in the L-shape and has the surface to which the latching spring 45A is attached. The first and second plate holders 23, 24 and the holder receiving members 44 to 46 constitute a connecting mechanism.

Holder guides 38 and 39 are respectively attached to the side frames 30A and 30B of the casing 30 at the portion over the slits 30a and 30b to form respectively vertical guide spaces G immediately under the holder entries 7A and 7B. Latching semicylindrical springs 45B are provided at the surfaces of both holder guides 38 and 39. The holder guides 38 and 39 have guide plates 38A and 39A. The holder guides 38 and 39 and the springs 45B cooperate with the first and second holders 23 and 24 so as to constitute a holding mechanism.

The read unit 40 comprises, as illustrated in Fig. 8, a frame 47 and a plate-shaped sensor holder 49 which is attached to the frame 47 on the lower surface thereof by a screw 50 and has a charge coupled device (CCD) sensor 48 and a control board 53 which is supported by the screws 50 and 52 by way of a spacer 51 under the sensor holder 49. The frame 47 has a protuberance 47A for defining a space between the front side thereof and an upper surface of the sensor holder 49 and a cylinder portion 47B which rises from the protuberance 47A and has its lower end opening therein and a convergent rod lens array 54 which is attached to the cylinder portion 47B. The CCD sensor (line sensor) 48 is disposed immediately under the convergent rod lens array 54. A reflection read light source unit 55 has a fluorescent lamp 56 and is disposed at the rear portion of the cylinder portion 47B of the frame 47 and supported by the carriage 43. A guide roll 57 is disposed opposite to the slide shaft 31 of the carriage 43 and rolls while contacting the rear surface of the transparent manuscript glass plate 5. Designated at 67 is an manuscript presser cover and 69A is a reflection manuscript (printed matter). The manuscript presser cover 67 has a unit recess 67A for housing therein the transmission read light source 20 on the casing 1 at its home position as illustrated in Fig. 2.

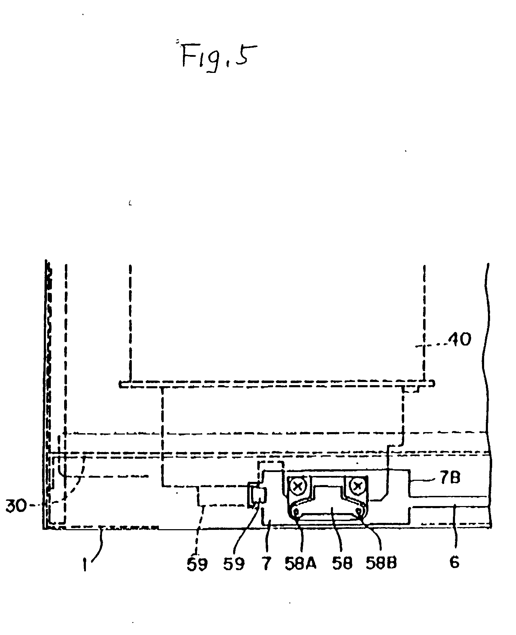

In Fig. 5, a power source connector 58 is supported by the holder receiving member 46 and the connecting pins of the power source plug 25 are inserted into the power source connector 58. An interlock micro switch is attached to the holder receiving member 46 at the rear position which is remote at the given interval from the power source 58 connector 58. The power source connector 58 has receptors 58A and 58B. The micro switch 59 has a lever 59A. The power source connector 58 and the micro switch 59 constitute a power source connecting unit.

The power source connecting unit is confronted vertically with the power source connecting entry 7B when the read unit 40 is positioned at the home position HP (as illustrated in Fig. 2).

The transmission read light source unit 20 inserts the power source connecting portion 26 from the power source connecting entry 7B into the casing 1 and also inserts the first holder 23 into the holder recess 6 so that it is always held by the casing 1. At this state, the power source connecting portion 26 is placed on the power source connecting unit while it is not engaged with the power source connecting unit.

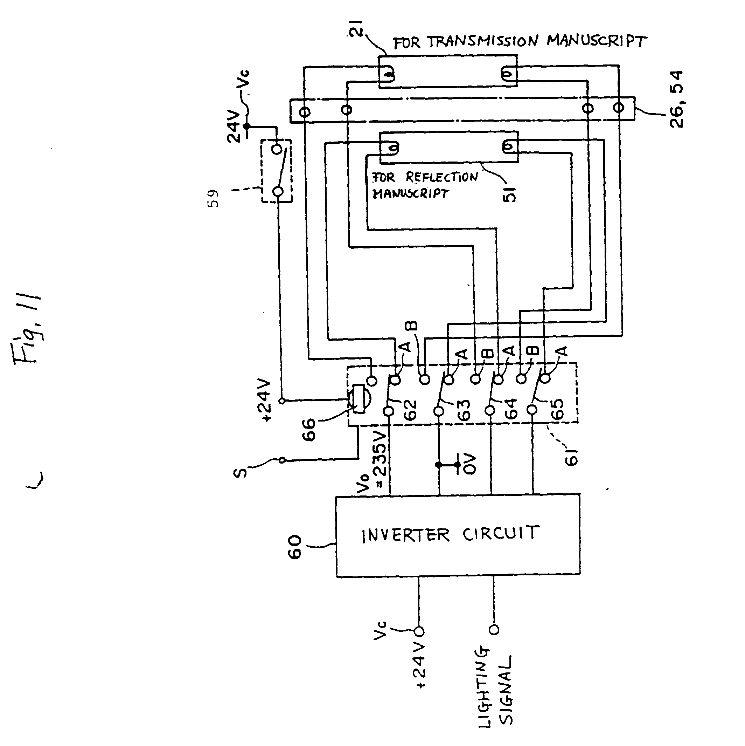

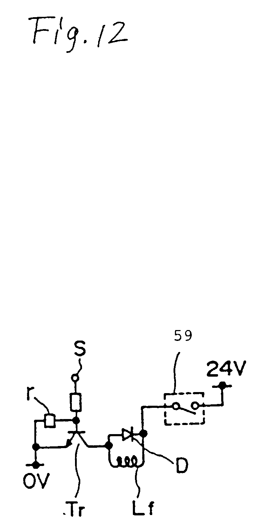

Fig. 11 is a circuit diagram of a luminaire power source unit which is housed in the second housing 4. The luminaire power source unit comprises an inverter source 60, a light source unit switching device 61 to which a reflection/transmission mode switching instruction S is applied, relay switches 62 to 65 which are normally switched to contact points A (at the side of reflection read light source unit 50) and an interlock circuit 66. The interlock circuit 66 has a circuit diagram as illustrated in Fig. 12 and comprises a transistor Tr, a coil Lf of a relay, a diode D and a resistor r wherein the relay switches 62 to 65 are switched to contact points B (at the side of the transmission read light source unit 20) when the coil Lf is biased. Designated at V_{O} is an output voltage (235 V) of the inverter power source 60 and V_{C} is a control voltage (24 V).

The operation of the image reader of the present invention will be described hereinafter.

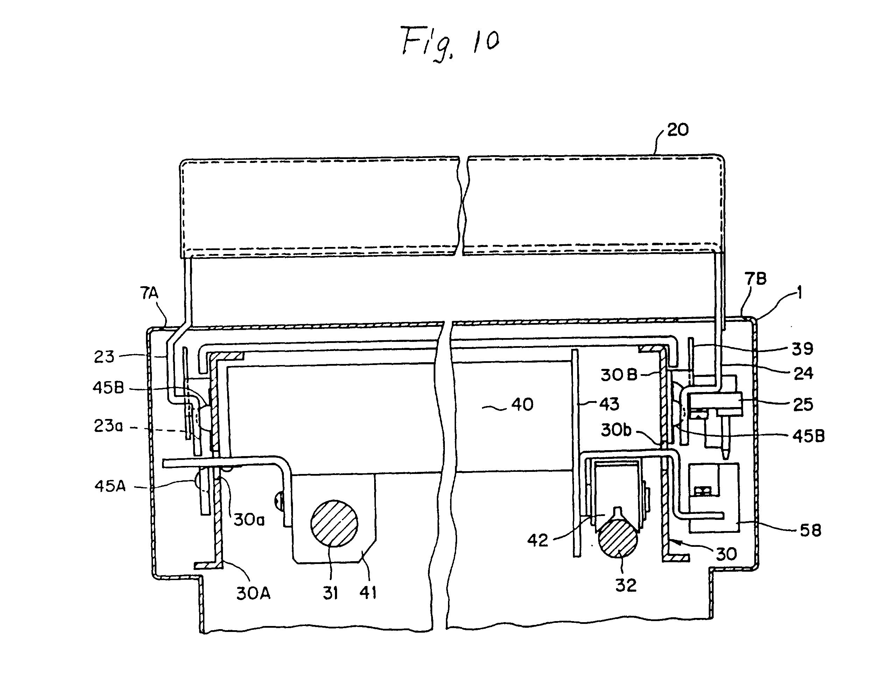

The transmission read light source unit 20 inserts the first and second holders 23 and 24 into the casing 1 through the holder entries 7A and 7B. The inserted first and second holders are respectively guided by the holder guides 38 and 39 since the holder guides 38 and 39 are provided in the casing 1. When the first and second holders 23 and 24 are guided to some position, the lower ends of the first and second holders contact the springs 45B to thereby compress the springs 45B so as to flatten the springs 45B and further lowers to a given position where the deformed spring 45B are restored to the original shape after engagement into the engaging slits 23a and 24a so that the first and second holders 23 and 24 are positioned and retained by the holding mechanism as illustrated in Fig. 10. At the time of reflection mode reading, the transmission read light source unit 20 is changed to a non-engagement state as illustrated in Fig. 10. At this state, the micro switch 59 is turned off since the stepped portion 24A of the holder 24 of the power source connecting portion 26 is spaced away from the lever 59A of the micro switch 59. Accordingly, even if the reflection/transmission mode switching instruction S is applied to the light source unit switching device 61, the coil Lf is not biased so that the relay switches 62 to 65 are positioned at the contact points A.

When the positioning of the first and second holders are completed, the reflection manuscript 69A is placed on the transparent manuscript glass plate 5 and is then covered by the manuscript presser cover 67 and a read start button, not shown, is pressed whereby the luminaire power is supplied to the reflection read light source unit 55 and the motor 36 is normally rotated. As a result, the belt 33 is driven in the direction of the arrow and the read unit 40 is moved from the home position HP to the direction of the arrow. At this time, the fluorescent lamp 56 of the reflection read light source unit 55 radiates the reflection manuscript 69A through the transparent manuscript glass plate 5 as illustrated in broken lines in Fig. 8 so that the reflective light is focused to bring about an image on the CCD sensor 48 by way of the convergent rod lens array 54.

At the time of transmission mode read, the transmission read light source unit 20 is lowered. When the transmission read light source unit 20 is lowered, the first and second holders 23 and 24 are compressed in the direction to flatten the springs 45B and slide on the springs 45B and are lowered so that the latch portion 23A of the first holder 23 passes through the slit 44a and thereafter contacts the spring 45A to thereby compress the spring 45A and lowers to the given position. As a result, the spring 45A is deformed and restored after engagement into the engaging slit 23a. At this time the stepped portion 23A is retained by the holder receiving member 44. The pins 25A and 25B of the power source plug 25 are engaged in the receptors 58A and 58B of the power source connector 58 so that both the pins 25A and 25B and the receptors 58A and 58B are electrically connected with one another whereby the stepped portion 24A of the second holder 24 is retained by the lever 59A of the micro switch 59 to thereby push it down. As a result, the micro switch 59 is turned on.

In conclusion, when the reflection/transmission mode switching instruction S is applied to the light source unit switching device 61, the coil Lf is biased so that the relay switches 62 to 65 are switched to the contact points B.

The transmission manuscript 69B is thereafter placed on the transparent manuscript glass plate 5 and the diffusion plate 68 instead of the manuscript presser cover 67 covers the transmission manuscript 69B. The read start button, not shown, is pressed so that the luminaire power is supplied to the transmission read light source unit 20 to thereby normally rotate the motor 36 whereby the belt 33 is driven in the direction of the arrow and the read unit 40 is moved from the home position HP to the direction of the arrow. The transmission read light source unit 20 is connected to the read nit 40 by way of the spring 45A at the side of the first holder 23 while the power source plug 25 is engaged with the power source connector 58 at the second holder 24 so that the transmission read power source unit 20 is moved together with the read unit 40. At this time, the first and second holders 23 and 24 move inside the holder recesses 6.

The light from the fluorescent lamp 21 of the transmission read light source unit 20 passes through the transmission manuscript 69B and the transparent manuscript glass plate 5, as illustrated in broken lines of Fig. 4, and the transmitted light passes through the convergent rod lens array 54 and brings about the image on the CCD sensor 48.

The transmission manuscript 69B can be read also with high quality since the optical path length of the transmission light is substantially the same as that of the reflection light.

Since the luminaire inverter power source 60 is commonly used by the reflection read light source unit 55 and the transmission read light source unit 20, the cost of the luminaire power source unit is cheap.

Since there is provided the switch 59 which is turned on provided that the read light source connecting portion 26 of the transmission read light source unit 20 is engaged with and connected with the power source connecting unit of the read unit 40 and the power is supplied to the transmission power source unit 20 when the switch 59 is turned on and the reflection/transmission mode switching instruction S is applied to the light source switching device 61. The power is not supplied to the transmission read light source unit 20 unless the power source connecting portion 26 is engaged with and connected to the power source connecting unit of the read unit 40. Furthermore, since the power connecting portion 26 is engaged with and connected to the power source connecting unit of the read unit 40 and the ON/OFF switching of the switch 59 are respectively effected in the casing 1 and the reflection read light source unit 55 is also provided in the casing 1, there is no likelihood that the operator, who operates the transmission read light source unit 20, receives an electric shock by the high power voltage to be supplied to the fluorescent lamp.

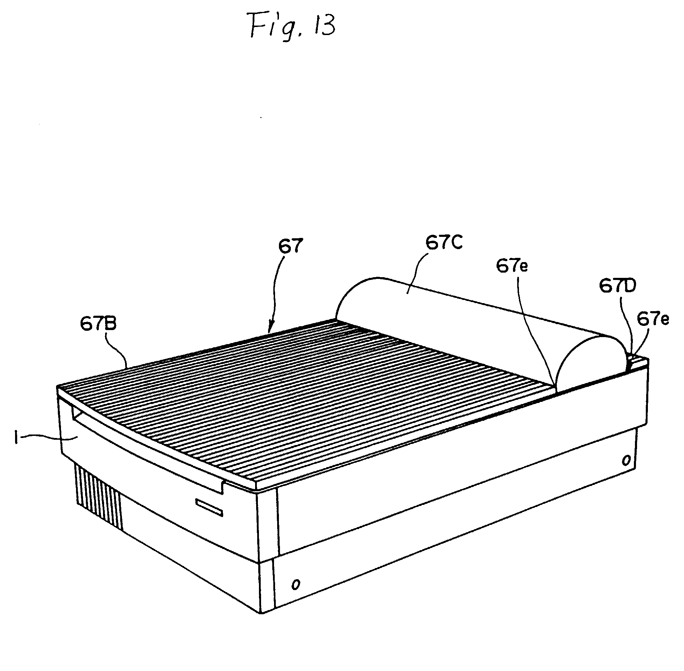

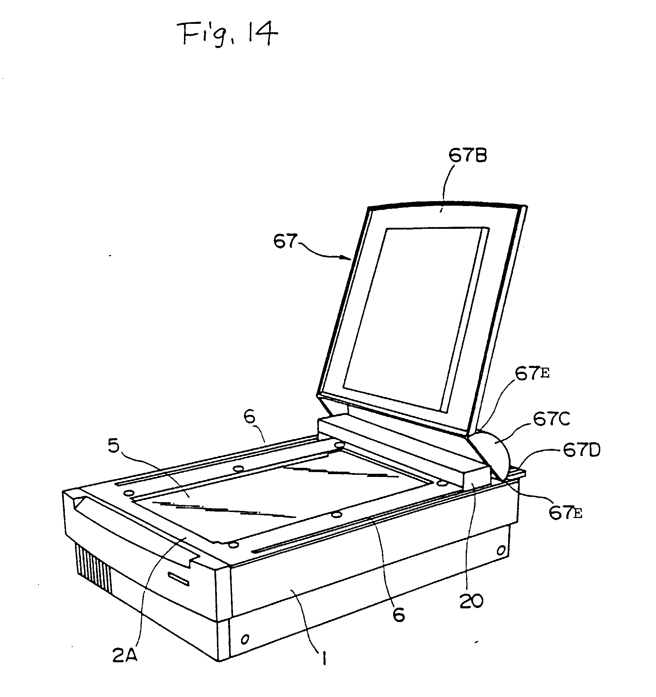

According to the present embodiment, a manuscript presser cover 67 is illustrated by the dotted lines as illustrated in Fig. 2 but not illustrated in detail. A preferred detail of the manuscript presser cover 67 is illustrated in Figs. 13 and 14. The manuscript presser cover 67 as illustrated in Figs. 13 and 14 is integrated with a cover body 67B, a transmission read light source unit storage portion 67C and a skirt portion 67D which are arranged in order and also has a size covering the entire surface of the casing 1. The transmission read light source unit storage portion 67C of the manuscript presser cover 67 is semicylindrical and closed at both ends thereof and partitions the transmission read light source unit storage space 67c inside thereof and has a hinge portion 67E at the boundaries between it and the cover body 67B and between it and the skirt portion 67D. The transmission read light source unit storage portion 67C can be bent upward to some angle relative to the skirt portion 67D and the cover body 67B can be bent upward to some angle relative to the transmission read light source unit storage portion 67C.

Since the manuscript presser cover 67 can store the transmission read light source unit 20, which is permitted to be in a non-engaged state at the home position, into the transmission read light source unit storage portion 67C and can place it on the transparent manuscript glass plate 5, it is possible to replace the manuscript by another manuscript by raising and lowering the cover body 67B alone at the time of the reflection mode read.

Since the transmission read light source unit storage portion 67C of the manuscript presser cover 67 is semicylindrical and closed at both ends thereof, thereby giving beauty to the image reader.

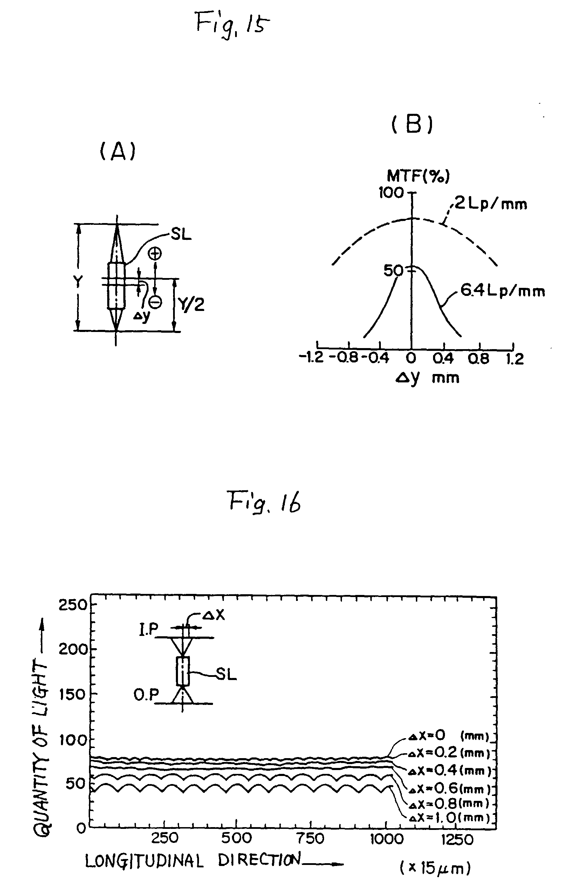

When the convergent rod lens SL is displaced by Δy as illustrated in Fig. 15(A) relative to the regular position, the image transmission characteristic MTF is sharply lowered as illustrated in Fig. 15(B) so that the image is likely to blur. When the optical axis of the self-focus lens SL and the center line of the CCD sensor 48 are displaced by ΔX, the intensity of light becomes uneven as illustrated in Fig. 16 to thereby deteriorate the image quality. Accordingly, in order to obtain high quality image, it is necessary to align the optical position of the convergent rod lens array 54 with the position of the CCD sensor 48. However, since the CCD sensor 48 has a line length greater than the width of the manuscript (A4, A3 sizes) and the convergent rod lens array 54 has the same length, it takes much time and labor for aligning the optical position of the convergent rod lens array 54 with the position of the CCD sensor 48, which causes the productivity to lower and the image reader to cost high.

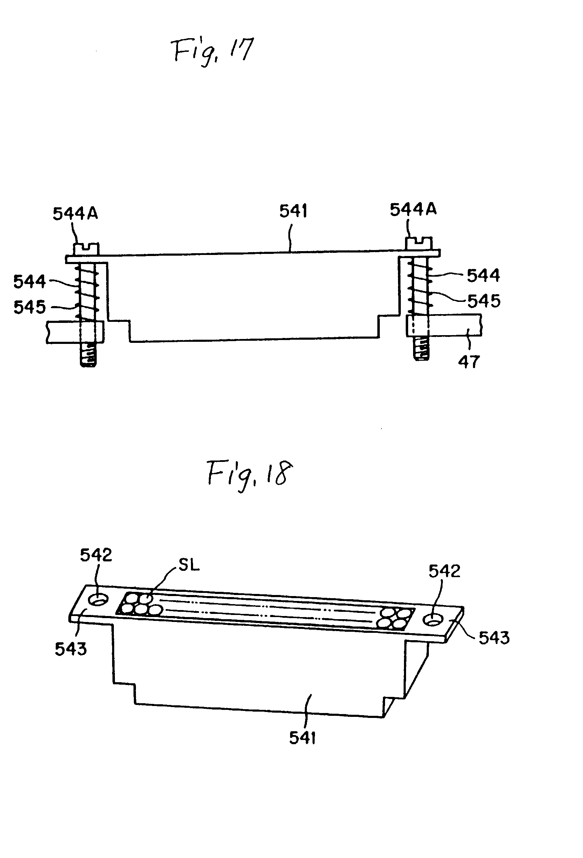

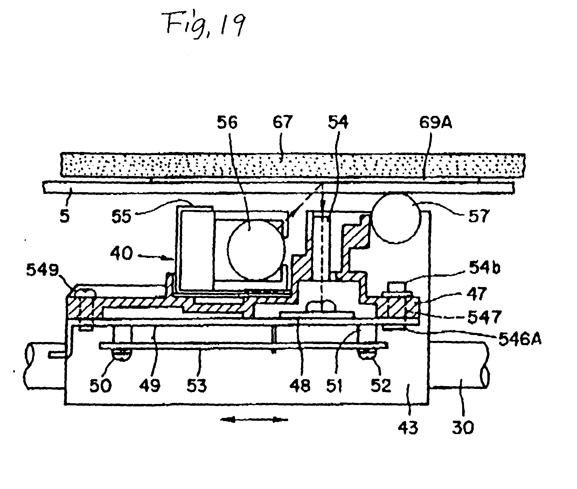

The inventors of the present application have solved this problem by supporting the convergent rod lens array 54 by way of an optical axis position minute regulating mechanism as illustrated in Fig. 17 and by regulating the CCD sensor 48 in the line direction position by a line direction position minute regulating mechanism as illustrated in Fig. 19.

In Fig. 17, a holder 541 of the convergent rod lens array 54 has ear portions 543 which extend at the longitudinal direction thereof and have holes 542 therein as illustrated in Fig. 18. Regulating screws 544 slidably penetrate the holes 542 of the ear portions 543 and screws into the frames 47 and rise perpendicular relative to the frames 47. Coil springs 545 are wound around the regulating screws 544 to thereby bias the ear portions 543 toward the lower surfaces of the heads 544A of the regulating screws 544.

With this arrangement, when the regulating screw 544 are turned to screw into the frame 47, the ear portions 543 are lowered against the resiliency of the coil springs 545 to the extent corresponding to the turning amount of the regulating screws 544 (-y direction in Fig. 15). When the regulating screw 544 are reversely turned, the ear portions 543 are pushed up by the resiliency of the coil springs 545 (y direction in Fig. 15) so that the position of the convergent rod lens array 54 can be minutely regulated in the direction of the optical axis with ease whereby the image is not blurred.

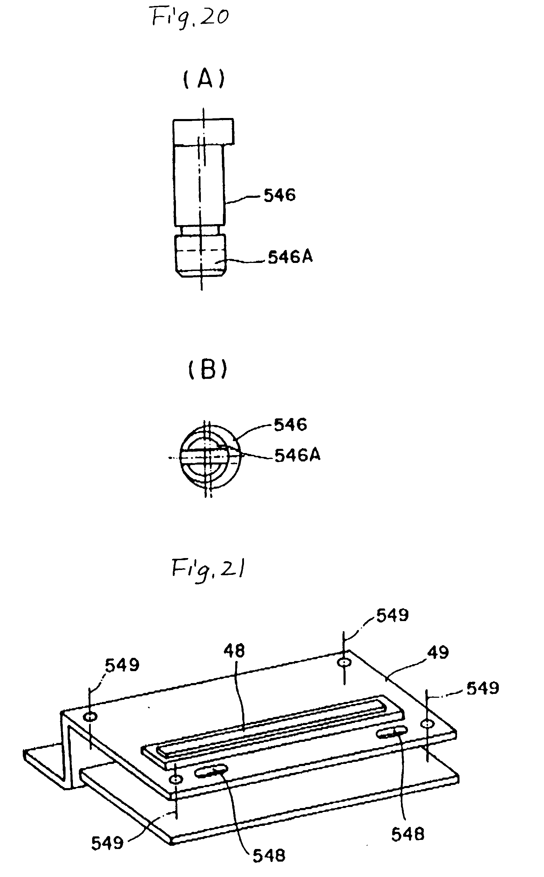

In Fig. 19, an eccentric shaft 546 has a shape as illustrate in Figs 20(A) and 20(B) and slidably penetrates a hole 547 defined in the frame 47 and extends toward the sensor holder 49. Fig. 20(A) is a side view of the eccentric shaft 546 and Fig. 20(B) is a bottom view of the eccentric shaft 546. The sensor holder 49 has two eccentric shaft engaging holes 548 in which the lower end portions 546A of the two eccentric shafts 546 are engaged as illustrated in Fig 21. The eccentric shaft engaging holes 548 extends in the line direction of the CCD sensor 48. The sensor holder 49 is fixed to the lower surface of the frame 47 by the bolts 549 at the four corners thereof.

In this arrangement, when the four bolts 549 are loosened and the two eccentric shaft 546 are turned, e.g. rightward, the sensor holder 49 is displaced rightward in Fig. 19 (-x direction in Fig. 16) by the interval corresponding to the turning amount of the eccentric shafts 546 while when the two eccentric shafts 546 are turned, e.g. leftward, the sensor holder 49 is displaced leftward in Fig. 19 (x direction in Fig. 16) for the interval corresponding to the turning amount of the eccentric shafts 546. As a result, the CCD sensor 48 is minutely regulated in the x direction thereof so that the divergence in the x direction of the convergent rod lens array 54 can be eliminated with ease and it is possible to obtain the even image with ease. Since it is possible to correct the divergence from the focal depth and the center line of the convergent rod lens array 54 independently if the line direction position minute regulating mechanism and the optical axis position minute regulating mechanism are provided in the image reader, it is possible to accurately align the optical positioning between the convergent rod lens array 54 and the CCD sensor 48 within a short time so that the productivity of the image reader can be improved compared with the conventional image reader.

According to the present invention, the transmission optical source unit and the read unit can be connected to each other by interposing the manuscript plate therebetween so as to move together so that the optical path of the transmitted light can be shortened at the time of reading the transmission manuscript. As a result, the reading quality can be improved. Furthermore, reflection manuscript can be read while the transmission read light source unit is set over the casing. Still furthermore, the luminaire power source is commonly used in the transmission read light source unit and the reflection read light source unit so that the cost for the luminaire power source can be reduced.

## Claims

1. An image reader comprising:
a casing (1) having a ceiling (2A) of a transparent manuscript plate (5), the casing (1) further housing therein a read unit (40) provided with a reflection read light source unit (55); a drive mechanism for reciprocally moving the read unit (40) from its home position (HP), and a luminaire power source unit; and
a transmission read light source unit (20) provided separately from the casing (1); wherein the transmitted light which has passed the manuscript, or the reflected light which has reflected from the manuscript, is focused on the receiving surface of a read sensor (48) of the read unit (40) to thereby produce the image thereon;
characterized in that the image reader further comprises a holding mechanism (23, 24, 38, 39, 45B) for supporting the transmission read light source unit (20) in a non-engaged position with said read unit (40) above the casing (1), and a connecting mechanism (23, 24, 44-46) for mechanically and electrically connecting said transmission read light source unit (20) in a lowered position to the read unit (40), the connecting mechanism being slidable in holder recesses (6) provided in the ceiling (2A), and that the luminaire power source unit is provided with an inverter power source (60), which is common to the reflection read light source unit (55) and the transmission read light source unit (20), and with a light source unit switching device (61) capable of providing the output of the inverter power source (60) to either the transmission read light source unit (20) or the reflection read light source unit (55) depending on whether the transmission read light source unit (20) is connected to the read unit (40) or not.

2. An image reader according to claim 1, wherein the image reader further comprises the transmission read light source unit (20) including first and second holders (23, 24) provided at both side ends thereof, one of which supports a power source connecting portion (26), the ceiling (2A) having first and second holder entries (7A and 7B) through which the first and second holders (23, 24) can pass, and slit-shaped recesses (6, 6), which extend in the moving direction of the read unit (40), the read unit (40) supporting a power source connecting unit (58, 59) which can be engaged with and connected to the power source connecting portion (26) immediately under one of the holder entries (7A and 7B).

3. An image reader according to claim 2, wherein the connecting mechanism comprises a holder receiving portion (44) provided on the read unit (40) and positioned under said first holder (23), and wherein the holder receiving portion (44) has an elastically deformable latching spring (45A) at the perpendicular surface thereof, and wherein the first holder (23) has a latching slit (23a) which is disposed at the lower hanging end thereof and in which the latching spring (45A) can be engaged by a one-shot operation in said lowered position of said transmission read light source unit (20).

4. An image reader according to claim 2 or 3, wherein the holding mechanism comprises holder guides (38, 39) provided perpendicularly inside the casing (1), and elastically deformable latching springs (45B) provided at the vertical surfaces of said holder guides (38, 39), and latching slits (23a, 24a) provided at the lower end hanging portions of said first and second holders (23, 24) in which the latching springs (45B) can be engaged by a one-shot operation so that the transmission read light source unit (20) can be held in said non-engaged position with said read unit (40).

5. An image reader according to claim 1 or 2, wherein the power source connecting unit (58, 59) of the read unit (40) has an interlock switch (59) and the power source connection portion (26) of the transmission read light source unit (20) has retaining members which can be connected to a switching member of said interlock switch, the interlock switch being OFF when the power source connecting unit (58, 59) is not connected to-the power source connecting portion (26) whereby the light source unit switching device (61) switches the output of said inverter power source (60) to the reflection read light source unit (55).

6. An image reader according to claim 5, wherein the retaining members. which can be connected to the switching member, are flat stepped portions of the first and second holders (23, 24).

7. An image reader according to one of claims 1 to 6, wherein the interlock switch (59) is disposed at the positive side of the light source unit switching device (61) of the luminaire power source unit.

8. An image reader according to one of claims 1 to 7, wherein a manuscript presser cover (67) to be placed on the transparent manuscript plate (5) has a transmission read light source unit storage portion (67C) which continues to a cover body (67B) of said manuscript presser cover (67).

9. An image reader according to claim 8, wherein the transmission read light source unit storage portion (67C) is cylindrical and closed at both ends thereof and continues to the cover body (67B) by way of hinged portions (67E) so as to be bent relative to each other.

10. An image reader according to claim 1, wherein the read sensor of said read unit (40) is a line sensor (48) which receives a transmitted light passed through the manuscript or a reflected light reflected from the manuscript in the line direction through a convergent rod lens array (54).

11. An image reader according to claim 10, wherein the convergent rod lens array (54) of the read unit (40) is supported by a frame (47) of the read unit (40) via an optical axis position minute regulating mechanism.

12. An image reader according to claim 11, wherein the optical axis position minute regulating mechanism comprises a holder (541), regulating screws (544), which slidably penetrate through ear portions (543) of the holder (541) extending in the longitudinal directions of the holder (541), to be screwed into the frame (47) at the tip end thereof so that they are positioned upright relative to the frame (47), and coil springs (545) wound around the regulating screws (544) to urge and press the ear portions (543) toward the heads of the regulating screws.

13. An image reader according to claim 1 and 10, wherein the read unit (40) has a line direction position minute regulating mechanism (546 to 549) for the read sensor (48).

14. An image reader according to claim 13, wherein the line direction position minute regulating mechanism comprises two shafts (546) which are provided in holes (547) of a frame (47) of said read unit (40) and which have eccentric lower end portions (546A) engaged in lengthy holes (548) which are provided in a sensor holder (49) and extend in the line direction of the read sensor (48), and wherein the sensor holder (49), after being aligned by correspondingly turning the eccentric shafts (546), is attached to the lower surface of the frame (47).

## Patentansprüche

1. Bildlesegerät, umfassend:
ein Gehäuse (1), das eine Decke (2A) einer transparenten Manuskriptplatte (5) aufweist, wobei das Gehäuse (1) ferner in sich eine Leseeinheit (40) beherbergt, die mit einer Reflexionsleselichtquelleneinheit (55) versehen ist;
einen Antriebsmechanismus zum Hin- und Herbewegen der Leseeinheit (40) von ihrer Ausgangsstellung (HP), und eine Beleuchtungsstromquelleneinheit; und
eine Transmissionsleselichtquelleneinheit (20), die separat von dem Gehäuse (1) bereitgestellt ist; wobei das transmittierte Licht, das durch das Manuskript hindurchgetreten ist, oder das reflektierte Licht, das von dem Manuskript reflektiert worden ist, auf die Empfangsfläche eines Lesesensors (48) der Leseeinheit (40) fokussiert ist, um dadurch darauf das Bild herzustellen;
dadurch gekennzeichnet, daß das Bildlesegerät ferner einen Haltemechanismus (23, 24, 38, 39, 45B) zum Tragen der Transmissionsleselichtquelleneinheit (20) in einer Nicht-Eingriffsposition mit besagter Leseeinheit (40) oberhalb des Gehäuses (1) und einen Verbindungsmechanismus (23, 24, 44 bis 46) zum mechanischen und elektrischen Verbinden besagter Transmissionsleselichtquelleneinheit (20) in einer herabgesenkten Position mit der Leseeinheit (40), wobei der Verbindungsmechanismus gleitbar in Halterausnehmungen (6) ist, die in der Decke (2A) bereitgestellt sind, und daß die Beleuchtungslichtquelleneinheit mit einer Inverterstromquelle (60), die gemeinsam für die Reflexionsleselichtquelleneinheit (55) und die Transmissionsleselichtquelleneinheit (20) ist, und mit einer Lichtquelleneinheitsschaltvorrichtung (61) ausgerüstet ist, die die Ausgabe der Inverterstromquelle (60) entweder an die Transmissionsleselichtquelleneinheit (20) oder die Reflexionsleselichtquelleneinheit (55) liefern kann, abhängig davon, ob die Transmissionsleselichtquelleneinheit (20) an die Leseeinheit (40) angeschlossen ist, oder nicht.

2. Bildlesegerät nach Anspruch 1, dadurch gekennzeichnet, daß das Bildlesegerät ferner die Transmissionsleselichtquelleneinheit (20) umfaßt, die einen ersten und einen zweiten Halter (23, 24) enthält, die an ihren beiden Seiten bereitgestellt sind und von denen einer einen Stromquellenverbindungsbereich (26) trägt, wobei die Decke (2A) einen ersten und einen zweiten Haltereingang (7A und 7B), durch die der erste und der zweite Halter (23, 24) hindurchtreten können, und schlitzförmige Ausnehmungen (6,6'), die sich in der Bewegungsrichtung der Leseeinheit (40) ausbreiten, aufweisen, wobei die Leseeinheit (-40) eine Stromquellenverbindungseinheit (58, 59) trägt, die mit dem Stromquellenverbindungsbereich (26) in Eingriff gebracht werden kann und mit derselben verbunden werden kann, direkt unterhalb einer der Haltereingänge (7A und 7B).

3. Bildlesegerät nach Anspruch 2, dadurch gekennzeichnet, daß der Verbindungsmechanismus einen Halteraufnahmebereich (44) aufweist, der auf der Leseeinheit (40) bereitgestellt ist und unter besagtem ersten Halter (23) positioniert ist, und daß der Halteraufnahmebereich (44) eine elastisch deformierbare Sperrfeder (45A) auf seiner senkrechten Oberfläche aufweist, und daß der erste Halter (23) einen Verriegelungsschlitz (23a) aufweist, der an dem unteren, herunterhängenden Ende desselben angeordnet ist und in den die Sperrfeder (45A) durch einen Ein-Schritt-Betrieb in besagter abgesenkten Position besagter Transmissionsleselichtquelleneinheit (20) in Eingriff gebracht werden kann.

4. Bildlesegerät nach Anspruch 2 oder 3, dadurch gekennzeichnet, daß der Haltemechanismus Halterführungen (38, 39), die senkrecht innerhalb des Gehäuses (1) bereitgestellt sind, und elastisch deformierbare Sperrfedern (45B), die an den vertikalen Oberflächen besagter Halterführungen (38, 39) bereitgestellt sind, und Verriegelungsschlitze (23a, 24a), die an den unteren Enden der herunterhängenden Bereichen besagten ersten und besagten zweiten Halters (23, 24) bereitgestellt sind, in die die Sperrfedern (45B) durch einen Ein-Schritt-Betrieb in Eingriff gebracht werden können, umfaßt, so daß die Transmissionsleselichtquelleneinheit (20) in besagter Nicht-Eingriffsposition mit besagter Leseeinheit (40) gehalten werden kann.

5. Bildlesegerät nach Anspruch 1 oder 2, dadurch gekennzeichnet, daß die Stromquellenverbindungseinheit (58, 59) der Leseeinheit (40) einen Sperrschalter (59) aufweist, und der Stromquellenverbindungsbereich (26) der Transmissionsleselichtquelleneinheit (20) Zurückhalteglieder aufweist, die mit einem Schaltglied besagten Sperrschalters verbunden werden können, wobei der Sperrschalter AUS ist, wenn die Stromquellenverbindungseinheit (58, 59) nicht mit dem Stromquellenverbindungsbereich (26) verbunden ist, wodurch die Lichtquelleneinheitsschaltvorrichtung (61) den Ausgang besagter Inverterstromquelle (60) zu der Reflexionsleselichtquelleneinheit (55) schaltet.

6. Bildlesegerät nach Anspruch 5, dadurch gekennzeichnet, daß die Zurückhalteglieder, die mit dem Schaltglied verbunden sein können, flache abgestufte Bereiche des ersten und des zweiten Halters (23, 24) sind.

7. Bildlesegerät nach einem der Ansprüche 1 bis 6, dadurch gekennzeichnet, daß der Sperrschalter (59) auf der positiven Seite der Lichtquelleneinheitsschaltvorrichtung (21) der Beleuchtungsstromquelleneinheit angeordnet ist.

8. Bildlesegerät nach einem der Ansprüche 1 bis 7, dadurch gekennzeichnet, daß eine Manuskriptpressabdeckung (67), die auf die transparente Manuskriptplatte (5) zu plazieren ist, einen Transmissionsleselichtquelleneinheitslagerbereich (67C) aufweist, der zu einem Abdeckkörper (67B) der Manuskriptpressabdeckung (67) fortfährt.

9. Bildlesegerät nach Anspruch 8, dadurch gekennzeichnet, daß der Transmissionsleselichtquelleneinheitslagerbereich (67C) zylindrisch und an seinen beiden Enden geschlossen ist und zu dem Abdeckkörper (67B) über einen Gelenkbereich (67E) fortfährt, um relativ zueinander umgebogen zu werden.

10. Bildlesegerät nach Anspruch 1, dadurch gekennzeichnet, daß der Lesesensor besagter Leseeinheit (40) ein Zeilensensor (48) ist, der transmittiertes Licht, das durch das Manuskript hindurchgetreten ist, oder reflektiertes Licht, das von dem Manuskript reflektiert worden ist, in der Zeilenrichtung durch ein Konvergenzstablinsenfeld (54) empfängt.

11. Bildlesegerät nach Anspruch 10, dadurch gekennzeichnet, daß das Konvergenzstablinsenfeld (54) der Leseeinheit (40) von einem Gestell (47) der Leseeinheit (40) über einen Feinreguliermechanismus für die Position der optischen Achse getragen wird.

12. Bildlesegerät nach Anspruch 11, dadurch gekennzeichnet, daß der Feinreguliermechanismus für die Position der optischen Achse einen Halter (541), Regulierschrauben (544), die sich gleitbar durch Ohrbereiche (543) des Halters (541) in den Längsrichtungen des Halters (541) erstrecken, um in das Gestell (47) an seinem spitzen Ende eingeschraubt zu werden, so daß sie relativ zu dem Gestell (47) aufrecht positioniert sind, und Schraubenfedern (545), die um die Regulierschrauben (544) gewickelt sind, um die Ohrbereiche (543) in Richtung der Köpfe der Regulierschrauben zu zwingen und zu drücken, umfaßt.

13. Bildlesegerät nach Anspruch 1 und 10, dadurch gekennzeichnet, daß die Leseeinheit (40) einen Feinreguliermechanismus (546 bis 549) für die Position der Zeilenrichtung für den Lesesensor (48) aufweist.

14. Bildlesegerät nach Anspruch 13, dadurch gekennzeichnet, daß der Feinreguliermechanismus für die Position der Zeilenrichtung zwei Wellen (546) umfaßt, die in Löchern (547) eines Gestells (47) besagter Leseeinheit (40) bereitgestellt sind und exzentrische untere Bereiche (546A) aufweist, die in Langlöcher (548) eingreifen, die in einem Sensorhalter (49) bereitgestellt sind, und sich in der Zeilenrichtung des Lesesensors (48) erstrecken, umfaßt, und daß der Sensorhalter (49), nachdem er durch entsprechendes Drehen der Exzenterwellen (546) ausgerichtet worden ist, an der Unterfläche des Gestells (47) angebracht ist.

## Revendications

1. Lecteur d'images comprenant :
un boîtier (1) ayant un plafond (2A) formé d'une plaque porte-original transparente (5), ce boîtier (1) contenant un organe de lecture (40) pourvu d'un organe à source lumineuse de lecture par réflexion (55), un mécanisme moteur faisant aller et venir l'organe de lecture (40) à partir de sa position de repos (HP), et un organe à source d'énergie de luminaire, et
un organe à source lumineuse de lecture par transmission (20) prévu séparément du boîtier (1), dans lequel la lumière transmise qui a traversé l'original ou la lumière qui a été réfléchie par l'original est focalisée sur la surface réceptrice d'un capteur de lecture (48) de l'organe de lecture (40) pour produire une image sur celui-ci,
caractérisé par le fait que le lecteur d'images comprend en outre un mécanisme de support (23, 24, 38, 39, 45B) supportant l'organe à source lumineuse de lecture par transmission (20) dans une position non engagée avec l'organe de lecture (40) au-dessus du boîtier (1), et un mécanisme de liaison (23, 24, 44 à 46) relient mécaniquement et électriquement l'organe à source lumineuse de lecture par transmission (20) dans une position abaissée à l'organe de lecture (40), ce mécanisme de liaison pouvant coulisser dans des creux de support (6) prévus dans le plafond (2A), et que l'organe à source d'énergie de luminaire est pourvu d'une source d'énergie à onduleur (60) qui est commune à l'organe à source lumineuse de lecture par réflexion (55) et à l'organe à source lumineuse de lecture par transmission (20), et d'un dispositif de commutation des organes à source lumineuse (61) capable d'envoyer la sortie de la source d'énergie à onduleur (60) soit à l'organe à source lumineuse de lecture par transmission (20), soit à l'organe à source lumineuse de lecture par réflexion (55) suivant que l'organe à source lumineuse de lecture par transmission (20) est ou non relié à l'organe de lecture (40).

2. Lecteur d'images selon la revendication 1, dans lequel l'organe à source lumineuse de lecture par transmission (20) comporte des premier et deuxième supports (23, 24) prévus à ses deux extrémités latérales, l'un desquels supporte une partie de raccordement de source d'énergie (26), le plafond (2A) ayant des première et deuxième entrée, de supports (7A et 7B) par lesquelles les premier et deuxième supports (23, 24) peuvent passer, et des creux en forme de fente (6, 6) qui s'étendent dans la direction de mouvement de l'organe de lecture (40), l'organe de lecture (40) supportant un organe de raccordement de source d'énergie (58, 59) qui peut être mis en prise avec la partie de raccordement de source d'énergie (26) et connecté à celui-ci immédiatement sous une des entrées de supports (7A et 7B).

3. Lecteur d'images selon la revendication 2, dans lequel le mécanisme de raccordement comprend une partie réceptrice de support (44) prévue sur l'organe de lecture (40) et placée sous le premier support (23), et dans lequel cette partie réceptrice de support (44) a un ressort de vérrouillage déformable élastiquement (45A) sur sa surface perpendiculaire, et dans lequel le premier support (23) a une fente de verrouillage (23a) qui est située à son extrémité pendante inférieure et dans laquelle le ressort de verrouillage (45A) peut être engagé par une opération d'un seul coup dans la position abaissée de l'organe à source lumineuse de lecture par transmission (20).

4. Lecteur d'images selon l'une des revendications 2 et 3, dans lequel le mécanisme de support comprend des guides de support (38, 39) prévus perpendiculairement à l'intérieur du boîtier (1), et des ressorts de verrouillage déformables élastiquement (45B) prévus sur les surfaces verticales de ces guides de support (38, 39), et des fentes de verrouillage (23a, 24a) prévues sur les parties pendandes d'extrémité inférieures des premier et deuxième supports (23, 24) et dans lesquelles les ressorts de verrouillage (45B) peuvent être engagés par une opération d'un seul coup de façon que l'organe à source lumineuse de lecture par transmission (20) puisse être fixé dans la position non engagée à l'organe de lecture (40).

5. Lecteur d'images selon l'une des revendications 1 et 2, dans lequel l'organe de raccordement de source d'énergie (58, 59) de l'organe de lecture (40) a un interrupteur d'enclenchement (59) et la partie de raccordement de source d'énergie (26) de l'organe à source lumineuse de lecture par transmission (20) a des éléments de retenue qui peuvent être reliés à un élément de commutation de l'interrupteur d'enclenchement, l'interrupteur d'enclenchement étant ouvert lorsque l'organe de raccordement de source d'énergie (58, 59) n'est pas raccordé à la partie de raccordement de source d'énergie (26), de sorte que le dispositif de commutation des organes à source lumineuse (61) envoie la sortie de la source d'énergie à onduleur (60) à l'organe à source lumineuse de lecture par réflexion (55).

6. Lecteur d'images selon la revendication 5, dans lequel les éléments de retenue qui peuvent être reliés à l'élément de commutation sont des parties étagées plates des premier et deuxième supports (23, 24).

7. Lecteur d'images selon l'une des revendications 1 à 6, dans lequel l'interrupteur d'enclenchement (59) est placé du côté positif du dispositif de commutation des organes à source lumineuse (61) de l'organe à source d'énergie de luminaire.

8. Lecteur d'images selon l'une des revendications 1 à 7, dans lequel un couvercle presse-original (67) se plaçant sur la plaque porte-original transparente (5) a une partie de rangement de l'organe à source lumieuse de lecture par transmission (67C) qui se continue en un corps (67B) du couvercle presse-original (67).

9. Lecteur d'images selon le revendication 8, dans lequel la partie de rangement de l'organe à source lumineuse de lecture par transmission (67C) est cylindrique et fermée à ses deux extrémités et se continue en la corps de couvercle (67B) par l'intermédiaire de parties à charnière (67B) pour le pliage de l'un par rapport à l'autre.

10. Lecteur d'images selon la revendication 1, dans lequel le capteur de lecture de l'organe de lecture (40) est un capteur de ligne (48) qui reçoit une lumière transmise par l'original ou une lumière réfléchie par l'original dans la direction de ligne par l'intermédiaire d'un groupe de lentilles bâtonnets convergentes (54).

11. Lecteur d'images selon la revendication 10, dans lequel le groupe de lentilles bâtonnets convergentes (54) de l'organe de lecture (40) est supporté par un bâti (47) de l'organe de lecture (40) par l'intermédiaire d'un mécanisme de réglage minutieux de la position de l'axe optique.

12. Lecteur d'images selon la revendication 11, dans lequel le mécanisme de réglage minutieux de la position de l'axe optique comprend un support (541), des vis de réglage (544) qui passent en coulissant par des parties oreilles (543) du support (541) s'étendant dans la direction longitudinale de celui-ci pour se visser dans le bâti (47) à l'extrémité de celui-ci de façon à être placées verticalemeni par rapport à celui-ci, et des ressorts hélicoïdaux (545) placés autour des vis de réglage (544) pour pousser et serrer les parties oreilles (543) vers les têtes des vis de réglage.

13. Lecteur d'images selon les revendications 1 et 10, dans lequel l'organe de lecture (40) a un mécanisme de réglage minutieux de position de direction de ligne (546 à 549) pour le capteur de lecture (48).

14. Lecteur d'images selon la revendication 13, dans lequel le mécanisme de réglage minutieux de position de direction de ligne comprend deux arbres (546) qui sont prévus dans des trous (547) d'un bâti (47) de l'organe de lecture (40) et ont des parties d'extrémité inférieures excentriques (546A) engagées dans des trous allongés (548) prévus dans le support de capteur (49) et s'étendant dans la direction de ligne du capteur de lecture (48), et dans lequel le support de capteur (49), après avoir été aligné par rotation correspondante des arbres excentriques (546), est fixé à la surface inférieure du bâti (47).
